# EUROPÄISCHE PATENTSCHRIFT

(11) **EP 3 059 819 B1**
(45) Veröffentlichungstag und Bekanntmachung des Hinweises auf die Patenterteilung: **08.11.2017**
(21) Anmeldenummer: 15155652.9
(22) Anmeldetag: 18.02.2015
(51) Int. Cl.: H02G 3/12, H02G 3/14, H01H 9/02

(54) **Elektrischer Schalter**
Electric switch
Commutateur électrique

(43) Veröffentlichungstag der Anmeldung: 24.08.2016
(73) Patentinhaber: GIRA GIERSIEPEN GmbH & Co. KG, 42477 Radevormwald (DE)
(72) Erfinder: Klein, Waldemar, 42329 Wuppertal (DE); Lankuttis, Klaus, 51465 Bergisch Gladbach (DE); Draeger, Bernd, 42369 Wuppertal (DE); Schwarzer, Carsten, 42499 Hückeswagen (DE)
(74) Vertreter: Patent- und Rechtsanwälte Dr. Solf & Zapf

(56) Entgegenhaltungen:
- DE-A1- 2 843 891
- DE-U1- 29 901 708
- DE-U1-202014 103 387

## Beschreibung

Die vorliegende Erfindung betrifft einen elektrischen Schalter gemäß dem Oberbegriff des Anspruch 1.

Derartige elektrische Schalter sind allgemein bekannt. Bei diesen Schaltern besteht das Problem, dass bei einem nicht mittigen oder verdrehten Einbau des Tragrings mit dem Schaltersockel in der jeweiligen Montageöffnung eine Parallelität zwischen den inneren Seitenkanten des Abdeckrahmens, die die Schalterwippe oder die Schaltertaste umschließen, und den gegenüberliegenden Seitenkanten der Schalterwippe bzw. der Schaltertaste nicht mehr erzeugt werden kann, so dass sich Fluchtungsabweichungen in horizontaler und/oder vertikaler Richtung ergeben. Um diese Fluchtungsabweichungen zu berücksichtigen, ist es erforderlich, eine bestimmte Spaltbreite des zwischen der Schalterwippe bzw. der Schaltertaste und dem Abdeckrahmen bestehenden Abstandsspaltes vorzusehen, wobei eine erforderliche Spaltbreite von beispielsweise 0,6 mm erforderlich ist. Eine derartige Spaltbreite ist aber aus optischen Gründen unschön, was insbesondere bei Flächenschaltern auffällt. Insbesondere auch bei Mehrfachschalterkombinationen, z. B. aus zwei, drei, vier oder fünf in Reihe in einem gemeinsamen Abdeckrahmen angeordneten Schaltern können unterschiedliche Spaltverläufe bei den einzelnen Schaltern auf Grund nicht übereinstimmender Einbaulagen auftreten, die das optische Gesamtbild wesentlich beeinträchtigen.

Aus der DE 28 43 891 C2 ist ein gattungsgemäßer elektrischer Schalter bekannt, bei dem die Umrisskanten der Schaltwippe zu den Umrisskanten des Abdeckrahmens parallel ausgerichtet werden können. Hierzu ist bei der Befestigung des rahmenförmigen Klemmstücks an dem Tragring eine Ausrichtung des Abdeckrahmens und des Zwischenlagerrahmens zueinander vorgesehen. Weiterhin ist die Schaltwippe am Gerätesockel um einen bestimmten Winkelbetrag verdrehbar gelagert.

Aus der DE 299 01 708 U1 ist ein elektrisches Installationsgerät bekannt, bei dem die Halteverbindung zwischen dem Gerätesockel und dem Tragrahmen höhenverstellbar ist.

Der vorliegenden Erfindung liegt die Aufgabe zu Grunde, ausgehend von einem Schalter der eingangs beschriebenen Art, diesen derart zu verbessern, dass ausgehend von einer optimalen Mittellage beim Einbau in einer Montageöffnung durch eine seitliche und/oder rotatorische Lageveränderung des Tragrings mit dem Schaltersockel hervorgerufene Einbauabweichungen derart ausgleichbar sind, dass eine Veränderung des Spaltbreitenmaßes des Spaltes zwischen dem Abdeckrahmen und der Schaltertaste bzw. der Schalterwippe vermieden wird.

Erfindungsgemäß wird dies durch die Merkmale des kennzeichnenden Teils des Anspruchs 1 erreicht. Hierbei verläuft die Mittelsenkrechte durch den Mittelpunkt der Tragringöffnung. Weiterhin ist es von Vorteil, wenn das Klemmstück in Bezug auf die Öffnungsebene der Tragringöffnung senkrecht verschiebbar und klemmend gelagert ist. Durch Ausbildung und Anordnung des erfindungsgemäßen Klemmstücks ist es möglich, Abweichungen in der Ausrichtung des Tragrings mit dem Schaltersockel in der Montageöffnung derart auszugleichen, dass ein zwischen der Schalterwippe bzw. der Schaltertaste und dem Abdeckrahmen bestehendes Spaltbreitenmaß über die gesamte Spaltlänge konstant bleibt, denn das Klemmstück kann sich in Bezug auf den Abdeckrahmen ausrichten, und somit erfolgt auch eine Ausrichtung der Schalterwippe bzw. der Schaltertaste, so dass sich das Spaltbreitenmaß aufgrund der Lageveränderung des Schaltersockels in der Montageöffnung einer Wand oder dergleichen nicht auf die Spaltbreite auswirkt. Zudem wird durch die senkrechte Verschiebbarkeit des Tragrings ein Tapetenausgleich möglich. Das erfindungsgemäße Klemmstück hat vorzugsweise eine der Form der Öffnung des Tragrings angepasste Rahmenform, wobei in seinen Rahmeneckbereichen in Richtung auf den Schaltersockel abstehende Klemmfortsätze ausgebildet sind, die radial elastisch in Bezug auf die durch den Mittelpunkt der Tragringöffnung verlaufende Mittelsenkrechte verformbar sind, wobei der diagonale Abstand von diagonal zueinander gegenüberliegenden Klemmfortsätzen größer/gleich dem diagonalen Abstand von diagonal gegenüberliegenden Eckbereichen der Öffnung des Tragrings ist, wobei insbesondere die Öffnung des Tragrings ein vierseitiges Polygon bildet und jeweils die gegenüberliegenden Seiten des Polygons gleich lang sind, und die zwischen den Seiten befindlichen Eckbereiche bogenförmig um den Öffnungsmittelpunkt des Polygons, d. h. der Tragringöffnung, verlaufen. Unter dem maßgeblichen diagonalen Abstand der Klemmfortsätze wird hierbei das größte Abstandsmaß am Umfang der Klemmfortsätze verstanden. Die radiale Elastizität der Klemmfortsätze ermöglicht sowohl die laterale Verschiebung des Klemmstücks als auch die rotatorische Lageveränderung des Klemmstücks, ohne dass die Klemmwirkung, d. h. der Kraftschluss zwischen dem Tragring und den Klemmfortsätzen, aufgehoben wird. Zudem ermöglicht die Ausbildung der Klemmfortsätze eine Verschiebung des Klemmstücks in Montagerichtung, d. h. in Richtung der Mittelsenkrechten auf die Öffnungsebene der Tragringöffnung.

Erfindungsgemäß kann es zweckmäßig sein, wenn die Klemmfortsätze des Klemmstücks als Hohlzylinder ausgebildet sind. Insbesondere ist hierbei beginnend an ihrer oberen Öffnung zunächst ein zylindrischer Abschnitt geformt und hieran schließt sich ein im Durchmesser sich vergrößernder Klemmabschnitt an, wobei zwischen dem Klemmabschnitt im montierten Zustand des Klemmstücks und dem Tragring ein Kraftformschluss vorhanden ist. Weiterhin ist es zweckmäßig, wenn der Klemmabschnitt des Klemmstücks so dimensioniert ist, dass das Klemmstück innerhalb des Tragrings oder des mit dem Tragring verbundenen Schaltersockels kraftschlüssig fixiert ist. Insbesondere ist es zweckmäßig, wenn der Schaltersockel ein Sockeloberteil aufweist, das sich durch die Öffnung des Tragrings erstreckt, und der Tragring an seiner Oberseite von dem Sockelteil mit einem Randstück umfasst wird, so dass der Tragring mit dem Sockeloberteil fest verbunden ist. Insbesondere ist es vorteilhaft, wenn das Sockeloberteil Durchbrüche aufweist, die derart in ihrem diagonalen Abstand und ihrer Größe und Form bemessen sind, dass die Klemmfortsätze des Klemmstücks im in die Durchbrüche eingesetzten Zustand in diesen kraftschlüssig im Bereich ihrer Anlageflächen gehalten sind.

Erfindungsgemäß ist es weiterhin von Vorteil, wenn am Klemmstück beidseitig eines jeden Klemmfortsatzes jeweils Justieransätze ausgebildet sind, die an ihren den Abdeckrahmen zugekehrten Stirnseiten eine Abschrägung aufweisen, die jeweils mit am Abdeckrahmen in dessen Öffnungsbereich ausgebildeten Schrägflächen korrespondiert, wodurch sich das Klemmstück am Abdeckrahmen ausrichten kann.

In weiterer Ausgestaltung der Erfindung kann es zweckmäßig sein, wenn das Klemmstück einen graden Lagersteg zur schwenkbaren Lagerung der Schalterwippe bzw. der Schaltertaste aufweist, der durch die Mittelsenkrechte durch den Mittelpunkt der Öffnung des Tragrings bzw. der Rahmenöffnung des Klemmstücks und parallel zu einer Rahmenseite der Rahmenöffnung verläuft, und eine abgerundete Lagerfläche besitzt. Hierbei besitzen die erfindungsgemäße Schaltertaste oder die Schalterwippe an ihrer Unterseite Lageransätze mit einem der Lagerfläche des Lagerstegs angepasstem Negativprofil zur Lagerung der Schaltwippe. Weiterhin ist es erfindungsgemäß vorteilhaft, wenn die mechanischen Schaltelemente, die insbesondere als Wippen ausgebildet und gelagert sind, an ihrer der Schaltertaste oder der Schalterwippe zugekehrten Seite als Hohlprofile ausgebildete Ansätze aufweisen und die Schaltertaste oder die Schalterwippe an ihrer den Ansätzen zugekehrten Unterseite Profilfortsätze besitzen, die in den Ansätzen längsverschieblich kraftschlüssig derart geführt sind, dass ein seitliches Spiel für eine Dreh- bzw. Schwenkbewegung um ihre Längsachse vorhanden ist und formschlüssig derart geführt sind, dass eine Spielfreiheit in Bezug auf die Übertragung der Schaltbewegung besteht.

Weitere vorteilhafte Ausführungen der Erfindung sind in den Unteransprüchen enthalten, wobei die Merkmale der Unteransprüche unabhängig voneinander auch nur mit den Merkmalen des Hauptanspruchs alleine erfindungsgemäß von Vorteil sind.

Anhand der beiliegenden Zeichnungen wird die Erfindung genauer erläutert werden. Dabei zeigen:
- Fig. 1: eine Aufsicht auf einen erfindungsgemäßen elektrischen Schalter,
- Fig. 2: eine Aufsicht auf den Schalter gemäß Fig. 1 ohne eingesetzte Schaltwippe und mit teilweise entferntem Abdeckrahmen,
- Fig. 2a: einen Schnitt entlang der Schnittlinie A-A in Fig. 2,
- Fig. 3: eine Aufsicht auf einen erfindungsgemäßen Schalter, jedoch ohne Abdeckrahmen und ohne Schaltersockel in einer von der Idealmittellage abweichenden lateralen Verschiebungslage,
- Fig. 4: eine Ansicht gemäß Fig. 3 in einer gegenüber Fig. 3 veränderten Verschiebungslage,
- Fig. 5a und 5b: Ansichten gemäß Fig. 3, jedoch in jeweils unterschiedlichen Verdrehungsstellungen des erfindungsgemäßen Klemmstücks in einem Tragring,
- Fig. 6: eine perspektivische Darstellung eines erfindungsgemäßen Klemmstücks,
- Fig. 7a: eine perspektivische Ansicht eines erfindungsgemäßen Abdeckrahmens mit eingesetztem Klemmstück, jedoch ohne Tragring,
- Fig. 7b: einen Schnitt entlang der Schnittlinie VII-VII in Fig. 7a,
- Fig. 8: einen Schnitt durch eine Schalterwippe mit Klemmstück gemäß der Erfindung,
- Fig. 9: eine Ansicht von unten auf eine Schalterwippe mit Klemmstück gemäß der Erfindung und
- Fig. 10: eine Ansicht auf einen Schaltersockel mit Tragring gemäß der Erfindung.

In den einzelnen Figuren der Zeichnung sind gleiche Teile stets mit denselben Bezugszeichen gekennzeichnet.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

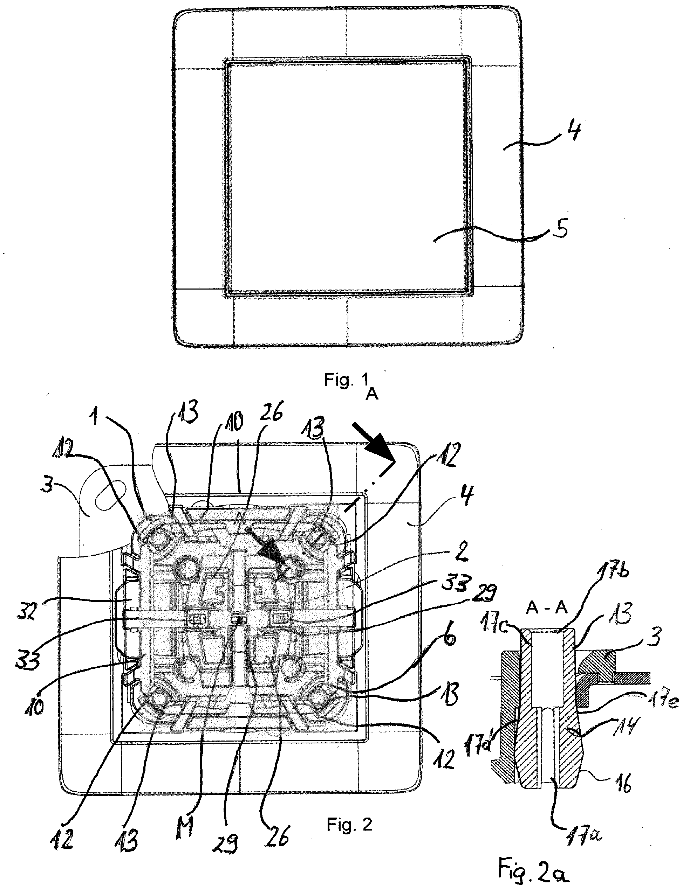

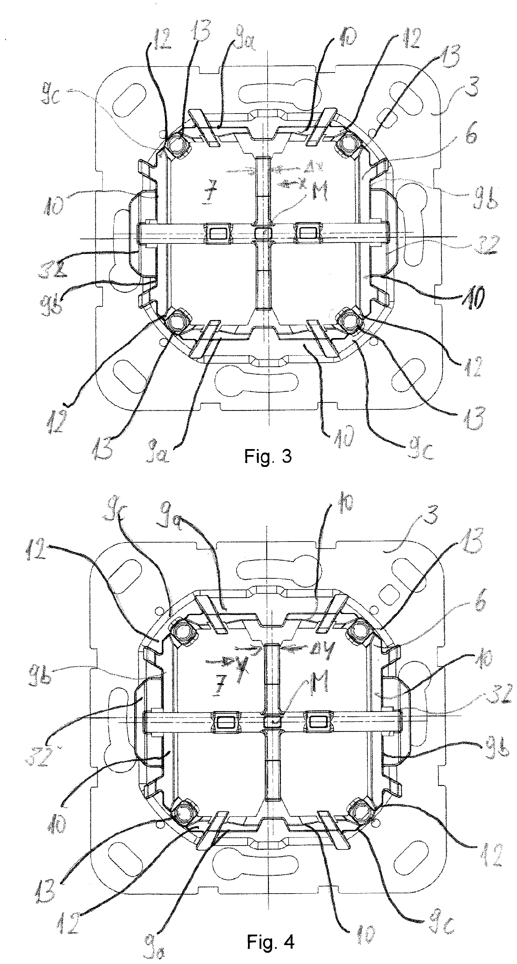

Wie sich aus den Fig. 1 und 2 ergibt, umfasst ein erfindungsgemäßer elektrischer Schalter einen Schaltersockel 1, der einteilig oder zweiteilig ausgebildet sein kann. Der Schaltersockel 1 beinhaltet in bekannter Weise elektrische Anschlusskontakte zum Anschließen von elektrischen Leitungen. Weiterhin weist der Schaltersockel 1 elektrische Schaltelemente in Form von z. B. Kontaktwippen auf, mit denen die elektrischen Anschlusskontakte entsprechend der vorhandenen Verschaltung, z. B. Reihenschaltung, Wechselschaltung oder dergleichen, kontaktiert werden. An dem Schaltersockel 1 sind ebenfalls mechanische Schaltelemente 2 gelagert, mit denen eine Schaltbewegung auf die elektrischen Schaltelemente zu übertragen ist. Weiterhin weist ein erfindungsgemäßer Schalter in bekannter Weise einen Tragring 3 auf, siehe Fig. 3, an dem der Schaltersockel 1 befestigt bez. befestigbar ist und mit dem der Schaltersockel 1 in einer Montageöffnung, z. B. einer Wand oder einer Unterputzdose oder dergleichen befestigbar ist.

Eine derartige Befestigung kann z. B. mittels am Tragring 3 oder am Schaltersockel 1 angeordneter Spreizkrallen erfolgen. Eine Verschraubung des Tragrings 3 ist aber ebenfalls möglich. Weiterhin weist ein erfindungsgemäßer Schalter einen Abdeckrahmen 4 auf, der den Tragring 3 an seiner Vorderseite abdeckt und der sich am Tragring 3 mit Spiel derart ausrichten kann, dass eine senkrechte, d. h. vertikale Anordnung des Abdeckrahmens 4 am Tragring 3 möglich ist. Der Abdeckrahmen 4 umschließt eine Schalterwippe 5 oder eine Schaltertaste 5. Die Schaltertaste 5 oder die Schalterwippe 5 ist mit den mechanischen Schaltelementen 2, die im Schaltersockel 1 vorhanden sind, derart verbunden, z. B. kraftschlüssig und formschlüssig, dass die Schaltbewegung der Schaltertaste 5 bzw. der Schalterwippe 5 auf die mechanischen Schaltelemente 2 übertragen wird. Erfindungsgemäß können z. B. auch zwei Schalterwippen 5 oder zwei Schaltertasten 5 nebeneinander im Abdeckrahmen 4 gelagert sein. Die Schalterwippe 5 bzw. die Schaltertaste 5 ist jeweils auf einem Klemmstück 6 schwenkbar gelagert. Das Klemmstück 6 ist rahmenförmig ausgebildet. Das Klemmstück 6 ist vorzugsweise in Bezug auf den Tragring 3 um eine Mittelsenkrechte M auf eine Öffnungsebene einer vom Tragring 3 umschlossenen Tragringöffnung 7 drehbar gelagert. Hierbei verläuft die Mittelsenkrechte M durch den Mittelpunkt der Tragringöffnung 7. Vorteilhafterweise ist das Klemmstück 6 zusätzlich oder alternativ lateral zu dieser Mittelsenkrechte M verschiebbar und klemmend am Tragring 3 befestigt bzw. befestigbar. Weiterhin kann es zweckmäßig sein, wenn das Klemmstück 6 senkrecht zu der Offnungsebene des Tragrings 3 in seiner Klemmstellung verschiebbar, d. h. verschiebbar in und gegen die Montagerichtung des Schaltersockels 1, ist. Das erfindungsgemäße Klemmstück 6 kann somit Abweichungen in der Ausrichtung des Tragrings 3 mit dem Schaltersockel 1 in der Montageöffnung derart ausgleichen, dass ein zwischen der Schalterwippe 5 bzw. der Schaltertaste 5 und dem Abdeckrahmen 4 bestehendes Spaltbreitenmaß des zwischen den vorstehenden Teilen bestehenden Abstandsspalts derart klein bemessen werden kann, dass z. B. eine Spaltbreite von 0,3 mm über den gesamten Spaltverlauf eingehalten werden kann. Durch diese erfindungsgemäße Ausgestaltung wird damit sichergestellt, dass sich die Spaltbreite auf Grund einer Lageveränderung nicht verändert. Dies beruht darauf, dass sich das erfindungsgemäße Klemmstück 6 an dem Abdeckrahmen 4 und somit auch die Schaltwippe 5 bzw. die Schaltertaste 5 ausrichten können, so dass sich deren Lage zueinander auch bei einer Fehlausrichtung des Tragrings 3 in seiner Montageöffnung nicht ändert.

Wie in den Fig. 3 und 4 dargestellt ist, besitzt die Tragringöffnung 7 die Form eines insbesondere vierseitigen Polygons, wobei die einander gegenüberliegenden Polygonseiten 9a, 9b z. B. gleich lang sind. Zwischen den Polygonseiten 9a, 9b sind jeweils Eckbereiche 9c ausgebildet, die z. B. bogenförmig um den Öffnungsmittelpunkt der Öffnung 7 des polygonförmigen Tragrings 3 verlaufen.

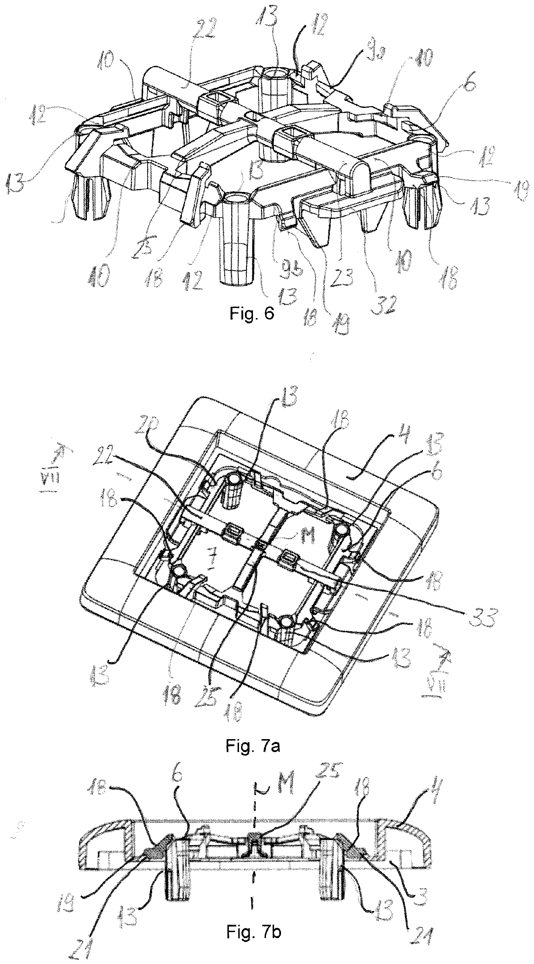

Das Klemmstück 6 weist eine der Form der Tragringöffnung 7 angepasste Rahmenform auf und wird von insbesondere vier geradlinigen Rahmenstegen 10 gebildet sowie in den Rahmeneckbereichen von vorhandenen Rahmen-Eckstegen 12, die die Rahmenstege 10 endseitig verbinden, siehe Fig. 6. Die Rahmen-Eckstege 12 verlaufen derart schräg, dass sie mit den zugehörigen Rahmenstegen 10 jeweils einen stumpfen Winkel einschließen, wobei die Rahmen-Eckstege 12 z. B. sekantenartig zu den insbesondere bogenförmigen Eckbereichen 9c verlaufen. An den Rahmen-Eckstegen 12 in den Rahmeneckbereichen sind in Richtung auf den Schaltersockel 1 abstehende Klemmfortsätze 13 an dem Klemmstück 6 angeformt. Diese Klemmfortsätze 13 sind in Bezug auf die durch den Mittelpunkt verlaufende Mittelsenkrechte M radial elastisch verformbar. Diese Klemmfortsätze 13 können z. B. derart ausgebildet und angeordnet sein, dass diagonal gegenüberliegende Klemmfortsätze 13 einen gegenseitigen maximalen Abstand besitzen, der größer/gleich dem diagonalen Abstand der Eckbereiche 9c des Tragrings 3 im nicht in den Tragring 3 eingesetzten Zustand des Klemmstücks 6 ist. Hierdurch ist das Klemmstück 6 in dem Tragring 3 im eingesetzten Zustand kraftschlüssig, d. h. klemmend in den Eckbereichen 9c fixiert bzw. fixierbar. Die Klemmfortsätze 13 sind zweckmäßigerweise als hohlzylindrische Fortsätze geformt und weisen an Ihrer Umfangswand 17 derart einander gegenüberliegende Längsschlitze 17a auf, dass sich in Bezug auf die durch den Mittelpunkt verlaufende Mittelsenkrechte M eine radial elastische Verformbarkeit der Klemmfortsätze 13 im Bereich ihrer Umfangswandung 14 ergibt. Die Klemmfortsätze 13 sind somit zweckmäßigerweise dübelartig ausgebildet und weisen eine obere Öffnung 17b zu Beginn des hohlzylindrischen Fortsatzes auf. Hierdurch ist es möglich, in die Klemmfortsätze 13 z. B. Schrauben herein zu drehen, so dass durch die hierdurch bewirkte Spreizung der hohlzylindrischen Fortsätze der Klemmfortsätze 13 eine Fixierung des Klemmstücks 6 in dem Tragring 3 erreicht werden kann, die eine Lösbarkeit des Klemmstücks 6 verhindert, so dass eine ungewollte Entfernung des Klemmstücks 6 vermieden wird. Hierbei ist es weiterhin von Vorteil, wenn im Kraftangriff der Schraube ein derartiges Profil gewählt ist, dass nur mit einem speziell ausgebildeten angepassten Schlüssel eine Betätigung der Schrauben möglich ist.

Zweckmäßigerweise sind die Klemmfortsätze 13 des Klemmstücks 6 derart ausgebildet, dass beginnend an ihrer oberen Öffnung 17b zunächst ein zylindrischer Abschnitt 17c vorhanden ist. An diesen schließt sich ein sich im Durchmesser vergrößernder Klemmabschnitt 17d an, wobei derKlemmabschnitt 17d derart ausgebildet ist, dass im montierten Zustand des Klemmstücks 6 mit dem Tragring 3 ein Kraftformschluss vorhanden ist, so dass eine sichere Fixierung erreichbar ist, gleichzeitig aber auch ein Herausziehen ermöglicht wird. Der Außendurchmesser des Klemmabschnittes 17d ist so dimensioniert, dass das Klemmstück 6 innerhalb des Tragrings 3 oder des mit dem Tragring 3 verbundenen Schaltersockels 1 kraftschlüssig, d. h. klemmend fixiert ist.

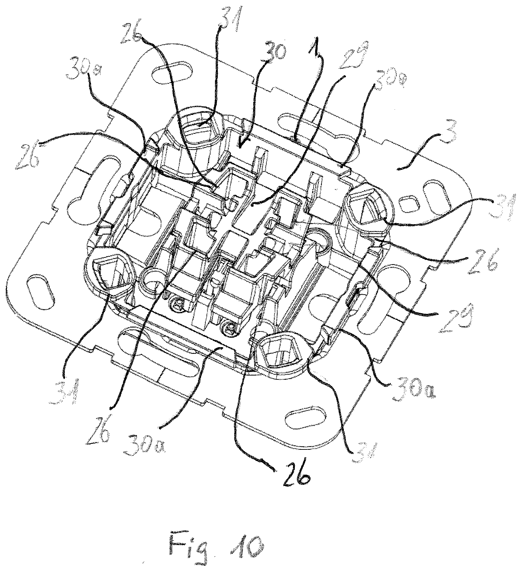

In Fig. 10 ist eine vorteilhafte Ausgestaltung eines Schaltersockels 1 dargestellt. Dieser Schaltersockel 1 weist ein Sockeloberteil 30 auf, das durch die Tragringöffnung 7 hindurch verläuft und den Tragring 3 an seiner Oberseite mit einem Randstück 30a umfasst, so dass der Tragring 3 mit dem Schaltersockel 1 fest verbunden ist. Das Sockeloberteil 30 weist Durchbrüche 31 auf, die derart in ihrem Diagonalabstand und Ihrer Größe und Form bemessen sind, dass die Klemmfortsätze 13 im in die Durchbrüche 31 eingesteckten Zustand in diesen kraftschlüssig gehalten werden. Zur Montage des Klemmstücks 6 werden die Klemmfortsätze 13 mittels ihrer endseitigen Einführungsschrägen 16 in die Durchbrüche 31 eingeführt. Beim weiteren Einstecken werden die Klemmfortsätze 13 im Bereich ihrer Klemmabschnitte 17d radialelastisch auf Grund der vorhandenen Schlitze 17a verformt, so dass sie auf Grund der erzeugten Verformungsspannung kraftschlüssig an den den Klemmfortsätzen 17d gegenüberliegenden Abschnitten der Durchbrüche 31 anliegen, und wobei die Klemmfortsätze 13 an dem Tragring 3 kraftformschlüssig anliegen.

Weiterhin ist es zweckmäßig, wenn das Klemmstück 6 jeweils beidseitig seiner Rahmen-Eckstege 12 angeformte Justieransätze 18 besitzt (Fig. 7a,b). Diese Justieransätze 18 weisen an ihren im eingesetzten Zustand dem Abdeckrahmen 4 zugekehrten Stirnseiten eine Abschrägung 19 auf, die mit jeweils am Abdeckrahmen 4 im Bereich seines inneren Öffnungsrandes seiner Rahmenöffnung ausgebildeten Schrägflächen 21 korrespondieren, so dass sich das Klemmstück 6 über die Justieransätze 18 und die Schrägflächen 21 auf dem Abdeckrahmen 4 ausrichten kann, siehe Fig. 7a, 7b.

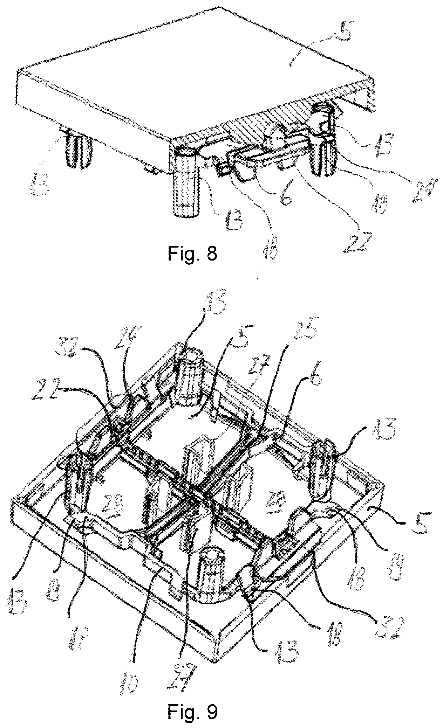

Insbesondere umfasst das Klemmstück 6 einen Lagersteg 22. Dieser Lagersteg 22 verläuft z. B. geradlinig parallel zu einem der Rahmenstege 10 und durch den Mittelpunkt des Klemmstücks 6, der im eingesetzten Zustand des Klemmstücks 6 auf der Mittelsenkrechten M durch den Mittelpunkt der Tragringöffnung 7 liegt. Der Lagersteg 22 besitzt eine abgerundete Lagerfläche 23. Auf dem Lagersteg 22 wird die Schaltwippe 5 bzw. die Schaltertaste 5 schwenkbar gelagert. Hierzu weisen diese auf ihrer dem Klemmstück 6 zugekehrten Unterseite Lageransätze 24 auf, die ein der Lagerfläche 23 angepasstes Negativprofil aufweisen. Weiterhin ist es zweckmäßig, wenn das Klemmstück 6 einen Aussteifungssteg 25 aufweist, der senkrecht zum Lagersteg 22 verläuft und diesen z. B. mittig schneidet, siehe Fig. 8, 9, Fig. 6,7.

Die am Schaltersockel 1 gelagerten Schalterelemente 2 weisen an ihrer der Schalterwippe 5 bzw. der Schaltertaste 5 zugekehrten Seite insbesondere als Hohlprofile ausgebildete Ansätze 26 auf, siehe Fig. 2. Die Schalterwippe 5 bzw. die Schaltertaste 5 weist entsprechend an ihrer Unterseite Profilfortsätze 27 auf, siehe Fig. 9, die im zusammengesetzten Zustand des erfindungsgemäßen Schalters in die Hohlprofil-Ansätze 26 längsverschieblich kraftschlüssig, in ihrer Umfangsrichtung formschlüssig eingreifen bzw. in diese eingeführt sind, so dass ein seitliches Spiel für eine Dreh- bzw. Schwenkbewegung der Profilfortsätze 27 in den Hohlprofil-Ansätzen 26 um ihre Längsachse und eine Spielfreiheit in Bezug auf die zu übertragenden Schaltbewegungen der Schalterwippe 5 bzw. der Schaltertaste 5 auf die mechanischen Schaltelemente 2 vorhanden ist. Die längsverschiebbare Lagerung der Profilfortsätze 27 in den Hohlprofil-Ansätzen 26 ermöglicht zudem in Verbindung mit den senkrecht zur Montageöffnung verlaufenden Klemmfortsätzen 13 einen Tapetenausgleich.

Weiterhin ist es zweckmäßig, wenn die mechanischen Schaltelemente 2 mit ihren Hohlprofil-Ansätzen 26 derart angeordnet sind, dass in jedem von dem Lagersteg 22 und dem Aussteifungssteg 25 gebildeten Quadranten 28 der Öffnung des Klemmstücks 6 im eingesetzten Zustand ein Ansatz 26 angeordnet ist. Hierfür sind zwischen den Ansätzen 26 sich kreuzende Aufnahmenuten 29 ausgebildet, in denen der Lagersteg 22 und der Aussteifungssteg 25 geführt werden. Weiterhin kann es zweckmäßig sein, wenn in dem Lagersteg 22 beidseitig der Mitte des Lagerstegs 22 Öffnungen 33 ausgebildet sind, so dass auf der Rückseite des Lagerstegs 22 Lichtleitelemente angeordnet werden können, und das von diesen Lichtleitelementen austretende Licht durch die Öffnung hindurch scheinen kann und somit eine indirekte Beleuchtung der Schaltwippe ermöglicht wird.

Weiterhin kann es zweckmäßig sein, wenn das Klemmstück 6 im Bereich unterhalb der freien Enden des Lagerstegs 22 seitliche Verbreiterungen 32, siehe Fig. 3, 4 und 6, besitzt, die im eingesetzten Zustand des Klemmstücks 6 auf dem Innenrand des Abdeckrahmens 4 aufliegen, wodurch eine Lagefixierung des Abdeckrahmens 4 erfolgt. Alternativ hierzu ist es ebenfalls möglich, den Lagersteg 22 an seinen freien Enden derart zu verlängern, dass diese freien Enden den Innenwandrand des Abdeckrahmens 4 zur Lagefixierung übergreifen und im eingesetzten Zustand auf diesem anliegen.

In den Fig. 3 und 4 ist dargestellt, wie das erfindungsgemäße Klemmstück 6 auf Grund seiner erfindungsgemäßen Ausgestaltung eine seitliche Einbauabweichung Δx, Δy in Pfeilrichtung X bzw. Y des Tragrings 3 in einer Montageöffnung von einer exakten Mittellage durch eine horizontale und vertikale Verschiebung ausgleichen kann. In den Fig. 3 und 4 ist jeweils nur eine horizontale Verschiebung in den Pfeilrichtungen X, Y dargestellt. Jedoch ist es ebenso erfindungsgemäß möglich, eine entsprechende vertikale Verschiebung aus der Mittellage vorzunehmen. Hierbei ist insbesondere ein horizontales und vertikales Verschiebemaß aus der Mittellage von 0,5 mm bis 0,6 mm, vorzugsweise 0,53 mm erfindungsgemäß möglich und zweckmäßig.

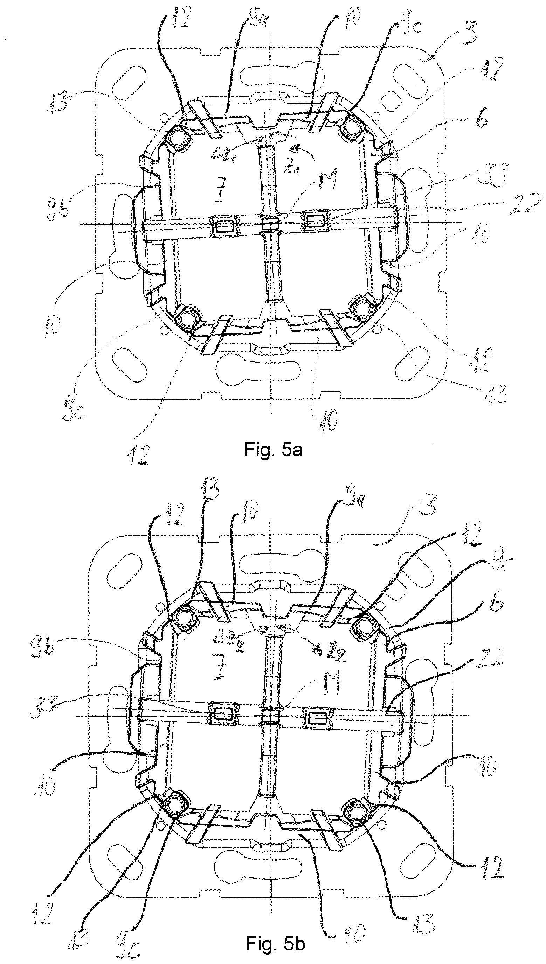

In den Fig. 5a und 5b ist dargestellt, wie ein erfindungsgemäßes Klemmstück 6 bei einer zur exakten Mittellage verschwenkten Einbaustellung des Tragrings 3 in einer Montageöffnung durch eine eigene Verdrehung in Pfeilrichtung Z₁ bzw. Z₂ einen Ausgleich um ein Winkelmaß Δz₁ bzw. Δz₂ bewirken kann. Hierbei ist ein Drehwinkel-Maß Δz von maximal 0,8° von Vorteil.

Die vorstehend beschriebene horizontale und vertikale Verschiebung und Verdrehung um das Winkelmaß Δz können sich auch gegenseitig überlagern.

### Bezugszeichenliste:

- 1: Schaltersockel
- 2: mechanische Schaltelemente
- 3: Tragring
- 4: Abdeckrahmen
- 5: Schalterwippe, Schaltertaste
- 6: Klemmstück
- 7: Öffnung in 3
- 8 9a, 9b: Polygonseiten
- 9c: Eckbereiche
- 10: Rahmenstege
- 11 12: Rahmen-Eckstege
- 13: Klemmfortsätze
- 14: Anlageflächen
- 15: Innenfläche
- 16: Einführungsschrägflächen
- 17: Rastrillen
- 17a: Schlitze
- 17b: obere Öffnung
- 17c: zylindrischer Abschnitt
- 17d: Klemmfortsätze
- 18: Justieransätze
- 19: Abschrägung
- 20: innerer Öffnungsrand
- 21: Schrägflächen
- 22: Lagersteg
- 23: Lagerfläche
- 24: Lageransätze
- 25: Aussteifungssteg
- 26: Hohlprofil-Ansätze
- 27: Profilfortsätze
- 28: Quadranten
- 29: Aufnahmenuten
- 30: Sockeloberteil
- 31: Durchbrüche
- 32: seitliche Verbreiterungen
- 33: Öffnungen

- VII-VII M: Mittelsenkrechte
- Z₁, Z₂: Pfeilrichtung
- X, Y: Pfeilrichtung
- Δx, Δy: seitliche Einbauabweichung
- Δz₁, Δz₂: seitliche Einbauabweichung

## Patentansprüche

1. Elektrischer Schalter, umfassend einen Schaltersockel (1) zur Aufnahme elektrischer Anschlusskontakte und von elektrischen Schaltelementen sowie von mechanischen Schaltelementen (2), die die elektrischen Schaltelemente betätigen, indem sie eine Schaltbewegung auf diese übertragen, sowie einen Abdeckrahmen (4) und eine innerhalb des Abdeckrahmens (4) gelagerte Schalterwippe (5) bzw. Schaltertaste (5) sowie einem Tragring (3) zum Befestigen des Schaltersockels (1) in einer Montageöffnung, wobei die Schalterwippe (5) bzw. die Schaltertaste (5) auf einem rahmenförmigen Klemmstück (6) schwenkbar gelagert ist, und das Klemmstück (6) am Tragring (3) gelagert ist,
**dadurch gekennzeichnet, dass** das Klemmstück (6) über radial elastische Klemmfortsätze (13) im Tragring (3) in Bezug auf den Tragring (3) um eine Mittelsenkrechte (M) auf eine Öffnungsebene einer von dem Tragring (3) umschlossenen Tragringöffnung (7) drehbar und/oder in Bezug auf die Mittelsenkrechte (M) lateral verschiebbar ist, ohne dass die Klemmwirkung, d. h. der Kraftschluss zwischen dem Tragring (3) und den Klemmfortsätzen (13) aufgegeben wird.

2. Elektrischer Schalter nach Anspruch 1,
**dadurch gekennzeichnet, dass** das Klemmstück (6) in Bezug auf eine Öffnungsebene des Tragrings (3) senkrecht verschiebbar klemmend gelagert ist.

3. Elektrischer Schalter nach Anspruch 1 oder 2,
**dadurch gekennzeichnet, dass** die Öffnung (7) des Tragrings (3) ein vierseitiges Polygon ist, wobei jeweils die gegenüberliegenden Seiten (9a, 9b) des Polygons gleich lang sind und die zwischen den Polygonseiten (9a, 9b) befindlichen Eckbereiche (9c) bogenförmig um den Öffnungsmittelpunkt verlaufen.

4. Elektrischer Schalter nach einem der Ansprüche 1 bis 3,
**dadurch gekennzeichnet, dass** das Klemmstück (6) eine der Form der Öffnung des Tragrings (3) angepasste Rahmenform besitzt, wobei in seinen Rahmeneckbereichen die in Richtung auf den Schaltersockel (1) abstehenden Klemmfortsätze (13) ausgebildet sind, die radial elastisch in Bezug auf die durch den Mittelpunkt) der Öffnung (7) des Tragrings (3) verlaufenden Mittelsenkrechten (M) verformbar sind, wobei der diagonale Abstand von diagonal einander gegenüberliegenden Klemmfortsätzen (13) größer/gleich dem diagonalen Abstand von diagonal gegenüberliegenden zugehörigen Eckbereichen der Öffnung (7) des Tragrings (3) ist.

5. Elektrischer Schalter nach einem der Ansprüche 1 bis 4,
**dadurch gekennzeichnet, dass** die Klemmfortsätze (13) als hohlzylindrische Fortsätze ausgebildet sind und an ihrer Umfangswand derart einander gegenüberliegende Längsschlitze (17a) aufweisen, dass sich eine in Bezug auf die durch den Mittelpunkt verlaufende Mittelsenkrechte (M) eine elastische Verformbarkeit der Klemmfortsätze (13) im Bereich ihrer Anlageflächen (14) ergibt.

6. Elektrischer Schalter nach Anspruch 5,
**dadurch gekennzeichnet, dass** die Klemmfortsätze (13) im Bereich ihrer Anlageflächen (14) einen im Durchmesser vergrößerten Abschnitt aufweisen.

7. Elektrischer Schalter nach Anspruch 5 oder 6,
**dadurch gekennzeichnet, dass** die Klemmfortsätze (13) beginnend an ihrer oberen Öffnung (17b) zunächst einen zylindrischen Abschnitt (17c) aufweisen, an den sich ein im Durchmesser vergrößernder Klemmabschnitt (17d) anschließt, wobei zwischen dem Klemmabschnitt (17d) und dem Tragring (3) im montierten Zustand des Klemmstücks (6) eine kraftformschlüssige Verbindung besteht.

8. Elektrischer Schalter (1) nach einem der Ansprüche 1 bis 7,
**dadurch gekennzeichnet, dass** am Klemmstück (6) beidseitig zu jedem Klemmfortsatz (13) jeweils Justieransätze (18) ausgebildet sind, die an ihren den Abdeckrahmen (4) zugekehrten Stirnseiten eine Abschrägung (19) aufweisen, die mit jeweils am Abdeckrahmen (4) in dessen Öffnungsbereich ausgebildeten Schrägflächen (21) korrespondieren.

9. Elektrischer Schalter (1) nach einem der Ansprüche 1 bis 8,
**dadurch gekennzeichnet, dass** das Klemmstück (6) einen geraden Lagersteg (22) zur schwenkbaren Lagerung der Schalterwippe (5) bzw. der Schaltertaste (5) aufweist, der die Mittelsenkrechte (M) durch den Mittelpunkt der Öffnung (7) des Tragrings (3) schneidet und parallel zu einer Rahmenseite des Klemmstücks (6) verläuft.

10. Elektrischer Schalter nach Anspruch 9,
**dadurch gekennzeichnet, dass** das Klemmstück (6) abgerundete Lagerflächen (23) aufweist.

11. Elektrischer Schalter (1) nach Anspruch 9 oder 10,
**dadurch gekennzeichnet, dass** senkrecht zum Lagersteg (22) durch den Mittelpunkt der Rahmenöffnung des Klemmstücks (6) ein Aussteifungssteg (25) verläuft.

12. Elektrischer Schalter (1) nach einem der Ansprüche 1 bis 11,
**dadurch gekennzeichnet, dass** die mechanischen Schaltelemente (2) an ihrer der Schaltertaste (5) bzw. der Schalterwippe (5) zugekehrten Seite als Hohlprofile ausgebildete Ansätze (26) aufweisen und die Schaltertaste (5) bzw. die Schalterwippe (5) an ihrer den Ansätzen (26) zugekehrten Unterseite Profilfortsätze (27) besitzen, die in den Ansätzen längsverschieblich, kraftschlüssig und formschlüssig derart geführt sind, dass durch ein seitliches Spiel eine Schwenkbewegung um ihre Längsachse gegeben ist und eine Spielfreiheit in Bezug auf die zu übertragende Schaltbewegung.

13. Elektrischer Schalter (1) nach einem der Ansprüche 9 bis 12,
**dadurch gekennzeichnet, dass** die Schaltertaste (5) bzw. die Schalterwippe (5) an ihrer Unterseite Lageransätze (24) zur Lagerung auf der Schalterwippe (5) bzw. der Schaltertaste (5) mit einem der Lagerfläche (23) der Schalterwippe (5) bzw. der Schaltertaste (5) angepasste Negativprofile aufweisen.

14. Elektrischer Schalter (1) nach einem der Ansprüche 1 bis 13,
**dadurch gekennzeichnet, dass** der Schaltersockel (1) mit einem Sockeloberteil (30) innerhalb des Tragrings (3) verläuft und den Tragring (3) formschlüssig fixiert und Durchbrüche (31) für eine klemmende Aufnahme der Klemmfortsätze (13) aufweist.

15. Elektrischer Schalter (1) nach einem der Ansprüche 1 bis 14,
**dadurch gekennzeichnet, dass** die mechanischen Schaltelemente (2) derart ausgebildet sind, dass zwischen den hohlprofilartigen Ansätzen (26) Aufnahmenuten (29) für den Lagersteg (22) und dem Aussteifungssteg (25) derart ausgebildet sind, dass jeweils einer der Ansätze (26) in einem von den beiden Stegen gebildeten Quadranten (28) angeordnet sind.

16. Elektrischer Schalter (1) nach einem der Ansprüche 1 bis 14,
**dadurch gekennzeichnet, dass** in die Klemmfortsätze (13) Schrauben zur radialen Spreizung einschraubbar sind.

## Claims

1. Electrical switch comprising a switch base (1) for accommodating electrical connection contacts and electrical switching elements and also mechanical switching elements (2) which operate the electrical switching elements by the said mechanical switching elements transmitting a switching movement to the said electrical switching elements, and also a covering frame (4) and a rocker switch (5) or pushbutton (5) which is mounted within the covering frame (4), and also a carrying ring (3) for fastening the switch base (1) in a mounting opening, wherein the rocker switch (5) or the pushbutton (5) are pivotably mounted on a frame-like clamping piece (6), and the clamping piece (6) is mounted on the carrying ring (3),
**characterized in that** the clamping piece (6), by means of radially elastic clamping projections (13) in the carrying ring (3), can be rotated about a mid-perpendicular (M) on an opening plane of a carrying ring opening (7), which is surrounded by the carrying ring (3), in relation to the carrying ring (3) and/or can be laterally displaced in relation to the mid-perpendicular (M), without the clamping effect, that is to say the force-fitting connection, between the carrying ring (3) and the clamping projections (13) being given up.

2. Electrical switch according to Claim 1,
**characterized in that** the clamping piece (6) is mounted in a vertically displaceable clamping manner in relation to an opening plane of the carrying ring (3).

3. Electrical switch according to Claim 1 or 2,
**characterized in that** the opening (7) of the carrying ring (3) is a four-sided polygon, wherein in each case the opposite sides (9a, 9b) of the polygon are of equal length and the corner regions (9c) which are located between the polygon sides (9a, 9b) run in an arcuate manner around the centre point of the opening.

4. Electrical switch according to one of Claims 1 to 3,
**characterized in that** the clamping piece (6) has a frame shape which is matched to the shape of the opening of the carrying ring (3), wherein, in its frame corner regions, the clamping projections (13) which protrude in the direction of the switch base (1) are formed in the frame corner regions, the said clamping projections being radially elastically deformable in relation to the mid-perpendicular (M) which runs through the centre point of the opening (7) of the carrying ring (3), wherein the diagonal distance between clamping projections (13) which are situated diagonally opposite one another is greater than/equal to the diagonal distance between associated diagonally opposite corner regions of the opening (7) of the carrying ring (3).

5. Electrical switch according to one of Claims 1 to 4,
**characterized in that** the clamping projections (13) are in the form of hollow-cylindrical projections and have, on their circumferential wall, longitudinal slots (17a) which are situated opposite one another in such a way that an elastic deformability of the clamping projections (13) in the region of their contact faces (14) is produced in relation to the mid-perpendicular (M) which runs through the centre point.

6. Electrical switch according to Claim 5,
**characterized in that** the clamping projections (13) have a section of enlarged diameter in the region of their contact faces (14).

7. Electrical switch according to Claim 5 or 6,
**characterized in that** the clamping projections (13), starting at their upper opening (17b), initially have a cylindrical section (17c) which is adjoined by a clamping section (17d) of increasing diameter, wherein there is a force-fitting connection between the clamping section (17d) and the carrying ring (3) in the mounted state of the clamping piece (6).

8. Electrical switch (1) according to one of Claims 1 to 7,
**characterized in that** adjustment attachments (18) are formed on the clamping piece (6) on both sides of each clamping projection (13), the said adjustment attachments having, at their end sides which face the covering frame (4), a bevel (19) which corresponds with oblique faces (21) which are formed on the covering frame (4) in its opening region.

9. Electrical switch (1) according to one of Claims 1 to 8,
**characterized in that** the clamping piece (6) has a straight supporting web (22) for pivotably supporting the rocker switch (5) or the pushbutton (5), which straight supporting web intersects the mid-perpendicular (M) through the centre point of the opening (7) of the carrying ring (3) and runs parallel to a frame side of the clamping piece (6).

10. Electrical switch according to Claim 9,
**characterized in that** the clamping piece (6) has rounded supporting faces (23).

11. Electrical switch (1) according to Claim 9 or 10,
**characterized in that** a reinforcing web (25) runs perpendicular to the supporting web (22) through the centre point of the frame opening of the clamping piece (6).

12. Electrical switch (1) according to one of Claims 1 to 11,
**characterized in that** the mechanical switching elements (2) have, on their side which faces the pushbutton (5) or the rocker switch (5), attachments (26) which are in form of hollow profiles, and the pushbutton (5) or the rocker switch (5) have, on its bottom side which faces the attachments (26), profiled projections (27) which are guided in a longitudinally displaceable, force-fitting and interlocking manner in the attachments in such a way that, owing to lateral play, a pivoting movement about their longitudinal axis is provided and free play in relation to the switching movement to be transmitted.

13. Electrical switch (1) according to one of Claims 9 to 12,
**characterized in that** the pushbutton (5) or the rocker switch (5) have, on its bottom side, supporting attachments (24) for support on the rocker switch (5) or the pushbutton (5) with a negative profile which is matched to the supporting face (23) of the rocker switch (5) or the pushbutton (5).

14. Electrical switch (1) according to one of Claims 1 to 13,
**characterized in that** the switch base (1), by way of a base upper part (30), runs within the carrying ring (3) and fixes the carrying ring (3) in an interlocking manner and has apertures (31) for receiving the clamping projections (13) in a clamping manner.

15. Electrical switch (1) according to one of Claims 1 to 14,
**characterized in that** the mechanical switching elements (2) are designed in such a way that receiving grooves (29) for the supporting web (22) and the reinforcing web (25) are formed between the hollow profile-like attachments (26) in such a way that in each case one of the attachments (26) is arranged in a quadrant (28) which is formed by the two webs.

16. Electrical switch (1) according to one of Claims 1 to 14,
**characterized in that** screws for radial spreading can be screwed into the clamping projections (13).

## Revendications

1. Commutateur électrique comprenant un socle de commutateur (1) destiné à recevoir des contacts de connexion électriques et des éléments de commutation électriques ainsi que des éléments de commutation mécaniques (2) qui actionnent les éléments de commutation électriques, en leur transmettant un mouvement de commutation, ainsi qu'un châssis de recouvrement (4) et une bascule de commutateur (5) ou un bouton de commutateur (5) monté à l'intérieur du châssis de recouvrement (4) et une bague de support (3) permettant de fixer le socle de commutateur (1) dans une ouverture de montage, dans lequel la bascule de commutateur (5) ou le bouton de commutateur (5) est monté de manière pivotante sur une pièce de serrage (6) ayant la forme d'un cadre et la pièce de serrage (6) est montée sur la bague de support (3),
**caractérisé en ce que** la pièce de serrage (6) peut être mise en rotation par l'intermédiaire de pattes de serrage élastiques (13) dans la bague de support (3) par rapport à la bague de support (3) autour d'un axe médian vertical (M) sur un plan d'ouverture d'une ouverture de bague de support (7) entourée par la bague de support (3) et/ou peut être déplacée latéralement par rapport à l'axe médian vertical (M) sans que l'effet de serrage, c'est-à-dire la complémentarité de force entre la bague de support (3) et les pattes de serrage (13) soit perdu.

2. Commutateur électrique selon la revendication 1,
**caractérisé en ce que** la pièce de serrage (6) est montée par serrage de manière coulissante verticalement par rapport à un plan d'ouverture de la bague de support (3).

3. Commutateur électrique selon la revendication 1 ou 2,
**caractérisé en ce que** l'ouverture (7) de la bague de support (3) est un polygone à quatre côtés, dans lequel les côtés opposés respectifs (9a, 9b) du polygone ont les mêmes longueurs et les zones d'angle (9c) se trouvant entre les côtés du polygone (9a, 9b) s'étendent d'une manière arquée autour du centre de l'ouverture.

4. Commutateur électrique selon l'une quelconque des revendications 1 à 3, **caractérisé en ce que** la pièce de serrage (6) possède une forme de cadre adaptée à la forme de l'ouverture de la bague de support (3), dans lequel, dans ses zones d'angles de châssis, les pattes de serrage (13) sont formées dans la direction du socle de commutateur (1), et peuvent être déformées élastiquement et radialement par rapport aux axes médians verticaux (M) passant par le centre de l'ouverture (7) de la bague de support (3), dans lequel la distance diagonale entre les pattes de serrage (13) mutuellement opposées en diagonale est supérieure ou égale à la distance diagonale entre les zones d'angle opposées en diagonale correspondantes de l'ouverture (7) de la bague de support (3).

5. Commutateur électrique selon l'une quelconque des revendications 1 à 4,
**caractérisé en ce que** les pattes de serrage (13) sont réalisées sous la forme de pattes cylindriques creuses et présentent sur leur paroi circonférentielle des fentes longitudinales (17a) mutuellement opposées de manière à produire une déformabilité élastique des pattes de serrage (13) un par rapport à l'axe médian vertical (M) passant par le centre, dans la zone de leurs surfaces d'appui (14).

6. Commutateur électrique selon la revendication 5,
**caractérisé en ce que** les pattes de serrage (13) présentent, dans la zone de leurs surfaces d'appui (14), une section de diamètre augmenté.

7. Commutateur électrique selon la revendication 5 ou 6,
**caractérisé en ce que** les pattes de serrage (13) présentent tout d'abord en partant de leur ouverture supérieure (17b) une section cylindrique (17c), suivie d'une section de serrage (17d) de diamètre augmenté, dans lequel une liaison à complémentarité de forme est établie entre la section de serrage (17d) et la bague de support (3) à l'état monté de la pièce de serrage (6).

8. Commutateur électrique (1) selon l'une quelconque des revendications 1 à 7,
**caractérisé en ce que**, des deux côtés des pattes de serrage (13), des épaulements d'ajustement (18) respectifs sont réalisés sur la pièce de serrage (6), qui présentent un biseau (19) au niveau de leurs faces avant tournées vers le châssis de recouvrement (4), lesquelles faces avant correspondent respectivement à des surfaces biseautées (21) formées au niveau du châssis de recouvrement (4) dans sa zone d'ouverture.

9. Commutateur électrique (1) selon l'une quelconque des revendications 1 à 8,
**caractérisé en ce que** la pièce de serrage (6) présente une barre d'appui (22) droite permettant un montage pivotant de la bascule de commutateur (5) ou du bouton de commutateur (5), qui coupe l'axe médian vertical (M) au niveau du centre de l'ouverture (7) de la bague de support (3) et s'étend parallèlement à un côté de châssis de la pièce de serrage (6).

10. Commutateur électrique selon la revendication 9,
**caractérisé en ce que** la pièce de serrage (6) présente des surfaces d'appui (23) arrondies.

11. Commutateur électrique (1) selon la revendication 9 ou 10,
**caractérisé en ce qu'**une barre de raidissage (25) s'étend perpendiculairement à la barre d'appui (22) en passant par le centre de l'ouverture de châssis de la pièce de serrage (6).

12. Commutateur électrique (1) selon l'une quelconque des revendications 1 à 11,
**caractérisé en ce que** les éléments de commutation mécaniques (2) présentent, au niveau de leur côté tourné vers le bouton de commutateur (5) ou la bascule de commutateur (5), des pattes (26) réalisées sous la forme de profils creux et le bouton de commutateur (5) ou la bascule de commutateur (5), au niveau de sa face inférieure tournée vers les pattes (26), possèdent des pattes profilées (27) qui sont guidées de manière coulissante longitudinalement dans les pattes, par complémentarité de force et par complémentarité de forme de manière à ce qu'un mouvement de pivotement soit produit autour de leur axe longitudinal du fait d'un jeu latéral et un jeu par rapport au mouvement de commutation devant être transmis.

13. Commutateur électrique (1) selon l'une quelconque des revendications 9 à 12,
**caractérisé en ce que** le bouton de commutateur (5) ou la bascule de commutateur (5) présentent sur sa face inférieure des pattes d'appui (24) destinées à reposer sur la bascule de commutateur (5) ou le bouton de commutateur (5) au moyen d'un profils négatifs adapté à la surface d'appui (23) de la bascule de commutateur (5) ou de la touche de commutateur (5).

14. Commutateur électrique (1) selon l'une quelconque des revendications 1 à 13,
**caractérisé en ce que** le socle de commutateur (1) s'étend à l'intérieur de la bague de support (3) par l'intermédiaire d'une partie supérieure de socle (30) et fixe la bague de support (3) par complémentarité de forme et présente des passages (31) destinés à recevoir, tout en les serrant, les pattes de serrage (13).

15. Commutateur électrique (1) selon l'une quelconque des revendications 1 à 14,
**caractérisé en ce que** les éléments de commutation mécaniques (2) sont réalisés de manière à ce que des fentes de réception (29) destinées à la barre d'appui (22) et à la barre de raidissage (25) soit réalisées entre les pattes (26) sous forme de profilés creux, de manière à ce que l'une des pattes (26) soit respectivement disposée dans un cadran (28) formé par les deux barres.

16. Commutateur électrique (1) selon l'une quelconque des revendications 1 à 14,
**caractérisé en ce que** des vis destinées à s'élargir radialement peuvent être introduites par vissage dans les pattes de serrage (13).
